# EUROPEAN PATENT SPECIFICATION

(11) **EP 0 593 777 B1**
(45) Date of publication and mention of the grant of the patent: **27.12.1996**
(21) Application number: 93908076.8
(22) Date of filing: 12.04.1993
(51) Int. Cl.: C09K 5/04

(54) **REFRIGERANT COMPOSITION AND BINARY REFRIGERATING SYSTEM USING THE COMPOSITION**
Kühlmittelzusammensetzung und Verwendung dieser Zusammensetzung in einer binären Kälteanlage
COMPOSITION REFRIGERANTE ET SYSTEME DE REFRIGERATION BINAIRE L'UTILISANT

(30) Priority: 10.04.1992 JP 90904/92
(43) Date of publication of application: 27.04.1994
(73) Proprietor: SANYO ELECTRIC CO., LTD., Moriguchi-shi, Osaka 570 (JP)
(72) Inventor: TAKEMASA, Kazuo, Ohta-shi, Gunma-ken 373 (JP)
(74) Representative: Brown, John David
(86) International application number: PCT/JP93/00461
(87) International publication number: WO 93/21280

(56) References cited:
- CHEMICAL ABSTRACTS, vol. 120, no. 16, 18 April 1994, Columbus, Ohio, US; abstract no. 195049z, DZELEZNY, V. P. ET AL 'The experimental and theoretical research of calorical properties of refrigerants R23, R116 and azeotropic'
- CHEMICAL ABSTRACTS, vol. 113, no. 16, 15 October 1990, Columbus, Ohio, US; abstract no. 139736q, VLADIMIROV, B. P. ET AL 'Saturated vapor pressure of Freons 218 and 329 and azeotropic mixtures of R116 and R23'
- CHEMICAL ABSTRACTS, Vol. 114, No. 14, (1991), B.V. GUNCHUK et al., "Study of density viscosity, thermal conductivity, surface tension of coolants R116, R132B2, R318, and aqeotropic mixtures of R116+R23 and R116+R13 at the boiling line".

## Description

### Technical Field

The present invention relates to a refrigerant composition which is used for refrigeration units and has less degree of the risk of destroying ozone layer, and to a binary refrigeration unit using the composition.

### Background Art

Heretofore, among those used as a refrigerant for refrigeration units, R12 (dichlorodifluoromethane) and R500 (an azeotropic mixture of R12 with R152a (1,1-difluoroethane)) are widely used. The boiling point of R12 is about -30°C, and the boiling point of R500 is about -33°C, so that both are suitable for common refrigeration units. In addition, even if the temperature at the suction to a compressor is relatively high, the temperature at the discharge from the compressor will not become as high as will cause an oil-sludge of the compressor. Further, R12 has a good compatibility with an oil of a compressor, and thus serves to bring the oil in a refrigerant circuit back to the compressor.

On the other hand, in order to obtain a low temperature zone as low as -80°C or less, R503 (an azeotropic mixture of R23 with R13) is used. The boiling point of R503 is -88.65°C, and thus suitable to obtain a low temperature.

However, it is said that the above-mentioned each refrigerant possibly destroy ozone layer, so that its use has been regulated. That is, R12 composing R500 and R13 composing R503 are undecomposable, so-called regulated refrigerants, and have been clarified to have a risk of destroying ozone layer when they are emitted into the atmosphere and reach the ozone layer.

Currently, researchers in the world have studied and groped substitutive refrigerants for the above-mentioned ones.

The present invention is made considering such points, and it is an object of the invention to provide a refrigerant composition which can attain a low temperature as low as -80°C without using a regulated refrigerant having a higher risk of destroying ozone layer and can be used as a substitutive refrigerant for R503 with respect to refrigerating capacity and other performances, and to provide a binary refrigeration unit which can actually attain a low temperature.

### Disclosure of the Invention

The present invention, as set forth in claim 1, is a refrigerant composition composed of an azeotropic mixture of trifluoromethane with hexafluoroethane and n-pentane or propane.

Also, the invention, as set forth in claim 2, is a refrigerant composition comprising a mixture of an azeotropic mixture of trifluoromethane with hexafluoroethane, and n-pentane, wherein the composition is composed in such a manner that n-pentane is mixed at a mixing ratio of 14% or less to the total weight of trifluoromethane and hexafluoroethane. 2

Also, the invention, as set forth in claim 2, is a refrigerant composition comprising a mixture of an azeotropic mixture of trifluoromethane with hexafluoroethane, and propane, wherein the composition is composed in such a manner that propane is mixed at a mixing ratio of 14% or less to the total weight of trifluoromethane and hexafluoroethane.

Further, the invention, as set forth in claim 3, is a binary refrigeration unit including a refrigerant circuit on high temperature side and a refrigerant circuit on low temperature side, and performing the condensation of the refrigerant in said refrigerant circuit on low temperature side by the refrigerant passing through a cascade condenser in said refrigerant circuit on high temperature side, wherein the refrigerant with which said refrigerant circuit on low temperature side is filled comprises a mixture of an azeotropic mixture of trifluoromethane with hexafluoroethane, and n-pentane or propane, wherein said refrigerant composition is composed in such a manner that n-pentane or propane is mixed at a mixing ratio of 14% or less to the total weight of trifluoromethane and hexafluoroethane.

According to the construction as set forth in claim 1, trifluoromethane (R23) is a hydrofluorocarbon (HFC) not containing chlorine, and hexafluoroethane (R116) is a fluorocarbon (FC) comprising only fluorine and carbon. Both materials have not been to be regulated with respect to the issue of ozone layer destruction, their boiling points are low such that trifluoromethane (R23) has a boiling point of -82.5°C and hexafluoroethane (R116) has a boiling point of -78.5°C, and their azeotropic point is about -88°C, whereby they can sufficiently exhibit a refrigerating capacity as a substitutive refrigerant for R503.

Although trifluoromethane (R23) causes an anxiety of increasing discharge temperature when a refrigerant circuit is filled with it because of a somewhat higher specific heat ratio of 1.22, the composition contains a predetermined quantity of hexafluoroethane (R116) having a specific heat ratio as considerably low as 1.09, thereby restraining an increase in discharge temperature. As a result, the composition can realize a required refrigerating capacity and restrain oil-sludge occurrence and oil deterioration.

Further, although the azeotropic mixture of trifluoromethane (R23) with hexafluoroethane (R116) has a poor compatibility with oil, the problem can be solved by providing an oil separator in a refrigerant circuit so as to completely separate an oil in the circuit and returning the mixture to a compressor, whereby there is no anxiety for a matter such as the compressor locking due to oil rising.

According to the construction as set forth in claim 1 or 2, the refrigerant composition can be used in such a manner that an oil in a refrigerant circuit can be returned to a compressor without completely separating particularly by an oil separator. That is, n-pentane, though has a boiling point as high as +36.07°C, has a good compatibility with an oil in a compressor, so that the oil can be returned to the compressor in a condition that the oil is dissolved in n-pentane by mixing a predetermined quantity of n-pentane, thereby preventing harmful effects such as the locking due to compressor oil rising. Now, n-pentane has such a high boiling point, so that if an excessively large quantity of n-pentane is mixed, the evaporation temperature of the component will increase to cause a low temperature taken as a target not to be obtained. Accordingly, mixing n-pentane at a mixing ratio of 14 weight % or less allows the oil to be returned to the compressor without increasing the evaporation temperature.

Also, according to the construction as set forth in claim 1 or 2, the refrigerant composition can be used in such a manner that an oil in a refrigerant circuit can be returned to a compressor without completely separating particularly by an oil separator. That is, propane has also a good compatibility with an oil in a compressor, so that the oil can be returned to the compressor in a condition that the oil is dissolved in propane by mixing a predetermined quantity of propane, thereby preventing harmful effects such as the locking due to compressor oil rising. Now, although propane has a boiling point as low as -42.75°C, so that it does not so greatly affect the evaporation point, it is combustible and thus has a risk of explosion, thereby causing a drawback to handling. However, keeping the mixing ratio of propane at 14% or less allows propane to be kept in an incombustible zone, thereby eliminating an anxiety such as explosion. Thus, mixing propane at a mixing ratio of 14 weight % or less allows the oil to be returned to the compressor while preventing a risk such as explosion.

According to the construction as set forth in claim 3, the oil return in an actual refrigerant circuit can be made good, and a low temperature of about -83°C can be accomplished in an evaporator without being accompanied by a risk such as explosion, whereby a refrigeration unit can be commercially applied which is applicable to a medical freezer and the like for the low-temperature insulation of blood and the like without using a regulated refrigerant.

### Brief Description of Drawings

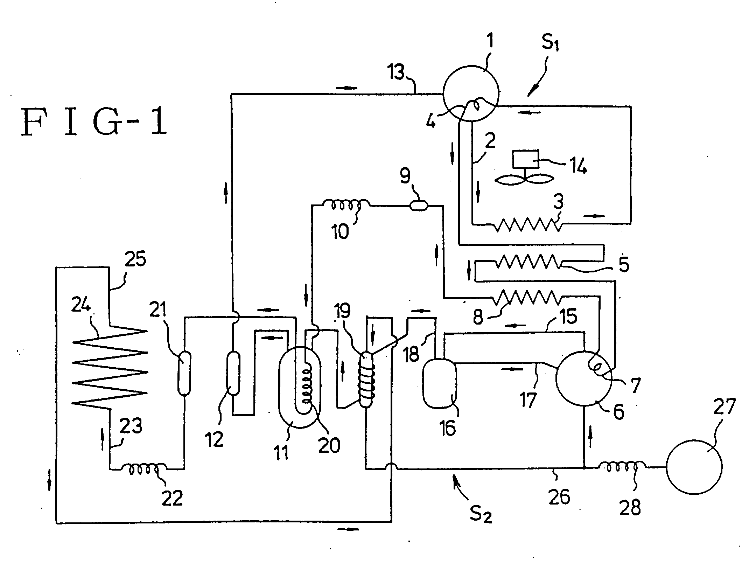

Fig. 1 is a refrigerant circuit of a binary refrigeration unit which is filled with a refrigerant composition of the present invention.

### Best Mode for Carrying Out the Invention

In order to describe the detail of the present invention, it will be explained with reference to the attached drawing. Fig. 1 is a refrigerant circuit diagram of a binary refrigeration unit which is filled with a refrigerant composition of the present invention. S1 indicates a refrigerant cycle on high temperature side, and S2 indicates a refrigerant cycle on low temperature side.

A discharge-side piping 2 of a compressor 1 comprising the refrigerant cycle S1 on high temperature side is connected to an auxiliary condenser 3; and the auxiliary condenser 3 is connected sequentially through an oil cooler 4 of the compressor 1, an auxiliary condenser 5, an oil cooler 7 of a compressor 6 comprising the refrigerant cycle S2 on low temperature side, a condenser 8, a dryer 9, a capillary tube 10 to a cascade condenser 11, and then through a liquid receiver 12 to the compressor 1 by means of a suction-side piping 13. Numeral 14 indicates a cooling fan for the condensers 3, 5 and 8.

A discharge-side piping 15 of the compressor 6 of the refrigerant cycle S2 on low temperature side is connected to an oil separator 16, and a compressor oil separated in the separator is returned through a return piping 17 to the compressor 6. On the other hand, the construction of the route of the refrigerant is such that the refrigerant flows into a piping 18, and is heat exchanged with a suction-side heat exchanger 19, then passes through the inside of a piping 20 of the cascade condenser 11 to condense, flows through a dryer 21, a capillary tube 22 and from an inlet pipe 23 into an evaporator 24, exits from an outlet pipe 25, and returns through the suction-side heat exchanger 19 and from a suction-side piping 26 of the compressor 6 to the compressor 6. Numeral 27 indicates an expansion tank which is connected through a capillary tube 28 to the suction-side piping 26.

The refrigerant cycle S1 on high temperature side is filled with R22 (chlorodifluoromethane, CHClF₂). The boiling point of R22 is -40.75°C at atmospheric pressure, and R22 condenses in the condensers 3, 5 and 8, is decompressed by the capillary tube 10, and flows into the cascade condenser 11 to evaporate. At this point, the temperature of the cascade condenser 11 becomes about -40°C.

The refrigerant cycle S2 on low temperature side is filled with an azeotropic mixture of R23 (trifluoromethane, CHF₃) with R116 (hexafluoroethane, C₂F₆) and n-pentane (C₅H₁₂). In this condition, the mixing ratio of R23 to R116 is 39:61, and n-pentane is composed in such a manner that it is mixed at a mixing ratio of 14% or less to the total weight of R23 and R116. As a result, this means that the cycle is filled with a refrigerant composition having a boiling point as considerably low as -88°C. Then, both the refrigerant and a compressor oil discharged from the compressor 6 flow into the oil separator 16. In the separator, they are separated into gas phase and liquid phase, and most of the oil, being in liquid phase, is returned from the return piping 17 to the compressor 6. The refrigerant and oil both of which are in gas phase flow into the piping 18, and are heat exchanged with the suction-side heat exchanger 19, and cooled in the cascade condenser 11 by the evaporation of the refrigerant in the refrigerant cycle S1 on high temperature side to condense. Thereafter, they are decompressed by the capillary tube 22, and then flow into the evaporator 24 to evaporate. The evaporator 24 is mounted in heat exchanging relation onto the wall face of a freezer (not shown) to cool the inside of the freezer. At this point, the evaporation temperature in the evaporator 24 reaches 88°C.

In the binary refrigeration unit constructed in this manner, trifluoromethane (R23) being a refrigerant composition with which the refrigerant cycle S2 on low temperature side is filled is a hydrofluorocarbon (HFC) not containing chlorine, and hexafluoroethane (R116) is a fluorocarbon (FC) comprising only fluorine and carbon, both of which have not been to be regulated with respect to the issue of ozone layer destruction, their boiling point is low such that trifluoromethane (R23) has its boiling point of -82.5°C and hexafluoroethane (R116) has its boiling point of -78.5°C, and their azeotropic point is about -88°C, whereby they can sufficiently exhibit a refrigerating capacity as a substitutive refrigerant for R503.

Although trifluoromethane (R23) causes an anxiety of increasing discharge temperature, when a refrigerant circuit is filled with it, because of a somewhat higher specific heat ratio of 1.22, hexafluoroethane (R116) having a specific heat ratio as considerably low as 1.09 is mixed at a mixing weight ratio of 61%, thereby restraining an increase in discharge temperature. As a result, the composition can realize a required refrigerating capacity and restrain oil-sludge occurrence and oil deterioration.

Now, a value K (Cp/Cv) of specific heat ratio, as shown in the below equation (1), affects greatly the discharge gas temperature of a compressor in adiabatic compression; and the greater the molecular weight of a composition is, the smaller the value is shown.$\text{(1)} {\text{T}}_{\text{2}} \text{=} {\text{T}}_{\text{1}} \text{(} \frac{{\text{P}}_{\text{2}}}{{\text{P}}_{\text{1}}} \text{)} {\text{}}^{\frac{\text{K-1}}{\text{K}}}$ (where
- T₁:: suction gas temperature (°K)
- T₂:: discharge gas temperature (°K)
- P₁:: suction pressure (kg/cm² abs)
- P₂:: discharge pressure (kg/cm² abs)
- K :: specific heat ratio (Cp/Cv)
- Cp:: constant-pressure specific heat
- Cv:: constant-volume specific heat

Further, although the azeotropic mixture of trifluoromethane (R23) with hexafluoroethane (R116) has a poor compatibility with oil, the problem can be solved by mixing n-pentane with the mixture at a mixing ratio of 14 % by weight. That is, n-pentane, though has a boiling point as high as +36.07°C, has a good compatibility with an compressor oil, so that the oil can be returned to the compressor in a condition that the oil is dissolved in n-pentane by mixing n-pentane at a mixing ratio within the range of 14 % by weight, thereby preventing harmful effects such as the locking due to compressor oil rising. As a result, an oil in a refrigerant circuit is not required to completely separate particularly by an oil separator 16 and then can be returned to a compressor 6. Now, n-pentane has such a high boiling point, so that if an excessively large quantity of n-pentane is mixed, the evaporation temperature of the component will increase to cause a low temperature taken as a target not to be obtained, but mixing n-pentane at a mixing ratio of 14 % by weight or less allows the oil to be returned to the compressor without increasing the evaporation temperature and while keeping n-pentane in an incombustible zone.

In this manner, according to a binary refrigeration unit of the present embodiment, the oil return can be made good, and a low temperature of about -88°C can be accomplished in an evaporator without being accompanied by a risk such as explosion, whereby a refrigeration unit can be commercially applied which is applicable to a medical freezer and the like for the low-temperature insulation of blood and the like without using a regulated refrigerant.

Also, since n-pentane is not produced in factories, n-pentane, when used in freezers and the like, is easily available and thus has a practical use.

Also, each of trifluoromethane (R23), hexafluoroethane (R116) and propane is in gas phase, so that each can improve the workability and serviceability of filling.

Although the present embodiment has been explained with the mixture of trifluoromethane (R23), hexafluoroethane (R116) and n-pentane, even when propane (R290, C₃H₈) in place of n-pentane is mixed at a similar mixing ratio, a similar effect can be obtained. That is, propane has also a good compatibility with an oil in a compressor, so that the oil can be returned to the compressor 6 in a condition that the oil is dissolved in propane by mixing propane at 14 % by weight, thereby preventing harmful effects such as the locking due to the oil rising of the compressor 6. Now, although propane has a boiling point as low as -42.75°C, so that it does not so greatly affect the evaporation point, it is combustible and thus has a risk of explosion, thereby causing a drawback to handling. However, keeping the mixing ratio of propane at 14 % by weight or less allows propane to be kept in an incombustible zone, thereby eliminating an anxiety such as explosion.

### Industrial Applicability

According to the present invention as described above, trifluoromethane (R23) is a hydrofluorocarbon (HFC) not containing chlorine, and hexafluoroethane (R116) is a fluorocarbon (FC) comprising only fluorine and carbon, both of which have not been to be regulated with respect to the issue of ozone layer destruction, their boiling point is low such that trifluoromethane (R23) has its boiling point of -82.5°C and hexafluoroethane (R116) has its boiling point of -78.5°C, and their azeotropic point is about -88°C, whereby they can sufficiently exhibit a refrigerating capacity as a substitutive refrigerant for R503.

Although trifluoromethane (R23) causes an anxiety of increasing discharge temperature, when a refrigerant circuit is filled with it, because of a somewhat higher specific heat ratio of 1.22, the composition contains a predetermined quantity of mixed hexafluoroethane (R116) having a specific heat ratio as considerably low as 1.09, thereby restraining an increase in discharge temperature. As a result, the composition, when a refrigeration unit is filled with it, can realize a required refrigerating capacity and restrain oil-sludge occurrence and oil deterioration.

## Claims

1. A refrigerant composition composed of an azeotropic mixture of trifluoromethane with hexafluoroethane and n-pentane or propane.

2. A refrigerant composition according to claim 1, wherein n-pentane or propane is mixed at a mixing ratio of 14% or less to the total weight of trifluoromethane and hexafluoroethane.

3. A binary refrigeration unit including a refrigerant circuit on high temperature side and a refrigerant circuit on low temperature side, and performing the condensation of the refrigerant in said refrigerant circuit on low temperature side by the refrigerant passing through a cascade condenser in said refrigerant circuit on high temperature side, wherein the refrigerant with which said refrigerant circuit on low temperature side is filled comprises a refrigerant composition according to claim 1 or 2.

## Patentansprüche

1. Eine Kühlmittelzusammensetzung, die aus einer azeotropen Mischung von Trifluormethan mit Hexanfluorethan und n-Pentan oder Propan besteht.

2. Eine Kühlmittelzusammensetzung nach Anspruch 1, wobei n-Pentan oder Propan in einem Mischungsverhältnis von 14% oder weniger zum Gesamtgewicht von Trifluormethan und Hexanfluorethan eingemischt wird.

3. Eine binäre Kälteanlage, die einen Kühlmittelkreislauf auf der Hochtemperaturseite und einen Kühlmittelkreislauf auf der Niedertemperaturseite einschließt und die Kondensation des Kühlmittels in besagtem Kühlmittelkreislauf auf der Niedertemperaturseite dadurch durchführt, daß das Kühlmittel durch einen Kaskadenkondensator in besagtem Kühlmittelkreislauf auf der Hochtemperaturseite strömt, wobei das Kühlmittel, mit dem besagter Kühlmittelkreislauf auf der Niedertemperaturseite gefüllt ist, eine Kühlmittelzusammensetzung nach Anspruch 1 oder 2 umfaßt.

## Revendications

1. Composition réfrigérante composée d'un mélange azéotrope de trifluorométhane, d'hexafluoroéthane et de n-pentane ou de propane.

2. Composition réfrigérante selon la revendication 1, dans laquelle on mélange le n-pentane ou le propane selon un rapport de mélange de 14 % ou moins par rapport au poids total de trifluorométhane et d'hexafluoroéthane.

3. Unité de réfrigération binaire comprenant un circuit réfrigérant du côté haute température et un circuit réfrigérant du côté basse température, et assurant la condensation du réfrigérant dans ledit circuit réfrigérant du côté basse température en faisant passer le réfrigérant à travers un condenseur à cascade dans ledit circuit réfrigérant du côté haute température, dans laquelle le réfrigérant remplissant ledit circuit réfrigérant du côté basse température comprend la composition réfrigérante selon la revendication 1 ou 2.
